# EUROPEAN PATENT APPLICATION

(11) **EP 4 458 872 A1**
(43) Date of publication of application: **06.11.2024**
(21) Application number: 22915052.9
(22) Date of filing: 29.12.2022
(51) Int. Cl.: C08F 212/34, C08F 230/02, C08L 79/08, B32B 27/08, C08K 3/36

(54) **ALLYL-TYPE FLAME-RETARDANT PREPOLYMER, RESIN COMPOSITION, COMPOSITE RESIN, PREPREG AND LAMINATED BOARD**

(30) Priority: 31.12.2021 CN 202111679479
(71) Applicant: Guangdong Hinno-Tech Co., Ltd., Guangzhou, Guangdong 510555 (CN); Research Institute of Tsinghua, Pearl River Delta, Guangzhou, Guangdong 510530 (CN)
(72) Inventor: QI, Xiaolong, Guangzhou, Guangdong 510555 (CN); WEN, Wenyan, Guangzhou, Guangdong 510555 (CN); ZHU, Yangjie, Guangzhou, Guangdong 510555 (CN)
(74) Representative: Murgitroyd & Company
(86) International application number: PCT/CN2022/143373
(87) International publication number: WO 2023/125802

(57) **Abstract**

The present application discloses an allyl-type flame-retardant prepolymer, a resin composition, a composite resin, a prepreg, and a laminate. The allyl-type flame-retardant prepolymer provided in the present application is prepared by pre-polymerization of an allyl-type benzoxazine compound and an allyl-type phosphorous compound in a mass part ratio of 100: (20 to 80). The resin composition, the composite resin, the prepreg, and the laminate prepared from the allyl-type flame-retardant prepolymer provided in the present application has a high flame retardancy, an excellent high-temperature modulus performance, a good heat resistance and water adsorption, and a superior dielectric property.

## Description

### TECHNICAL FIELD

This application relates to the technical field of copper clad laminates, in particular to an allyl-type flame-retardant prepolymer, a resin composition, a composite resin, a prepreg, and a laminate.

### BACKGROUND

A copper clad laminate (CCL) is a board material made by impregnating a reinforcing material with a resin and covering a copper foil on one or both sides of the reinforcing material followed by a hot-laminating. In the printed circuit board, the copper clad laminate provides functions of interconnection conduction, insulation, and support, and significantly affects the signal transmission speed, energy loss, characteristic impedance and other performances of the circuit. As the communication technology advances, the requirements for the performance of the copper-clad laminate have become more varied.

As a new type of high-performance resin material, a bismaleimide (BMI) resin has excellent heat resistance and high-temperature modulus retention. However, the bismaleimide resin comes with drawbacks such as high curing temperature and poor solubility when it is used alone. A modified bismaleimide (BMI) can address some of these drawbacks and is widely used in the preparation of the copper-clad laminate substrate. However, the flame retardancy of the modified bismaleimide is insufficient to meet the UL-94V0 standard. In order to improve the flame retardancy of the copper-clad laminate, a resin containing a flame retardant element, such as P, N, Si, etc., is generally added to the formula. One of the most effective flame retardants is a phosphorus-containing flame retardant such as a phosphorus-containing epoxy resin and a phosphazene compound. However, the phosphorus-containing flame retardant may negatively affect the heat resistance and the high-temperature modulus retention of the substrate when its amount is too high.

The patent document CN109504087A discloses a resin composition using a modified bismaleimide prepolymer as a raw material, and the resulting copper clad laminate exhibits a certain degree of heat resistance and flame retardancy but lacks flexibility and has low high-temperature modulus retention. The patent document CN106336662A discloses a thermoset resin composition in which an allyl-modified polyphenyl ether resin is added, and the resulting laminate exhibits a relatively good flame retardancy, but has a relatively low glass transition temperature (about 200°C), which is lower than an average value (200°C to 300°C) of bismaleimide-triazine (BT) resin-based board, along with unsatisfactory peel strength.

In view of the above, there is a need to provide a resin composition with a better comprehensive performance.

### SUMMARY

The objectives of the present application include providing an allyl-type flame-retardant prepolymer, a resin composition, and a composite resin, as well as a prepreg and a laminate made therefrom. The laminate has a high flame retardancy, a high peel strength, a low water absorption, and a high high-temperature modulus retention.

In a first aspect of present application, an allyl-type flame-retardant prepolymer is provided, including 100 mass parts of an allyl-type benzoxazine compound and 20 to 80 mass parts of an allyl-type phosphorous compound.

The allyl-type phosphorous compound has the following structural formula:

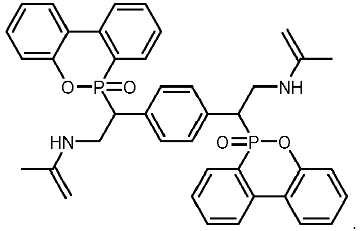

The allyl-type benzoxazine compound is selected from the compounds of the following structural formulas and combinations thereof: 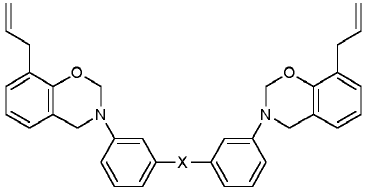 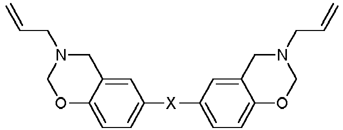 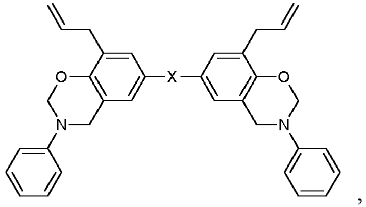
wherein X is independently selected from -CHRi-, -CR₂R₃-, -SO₂-, or -O-; and
R₁, R₂, and R₃ are each independently selected from -H or -CH₃.

In some embodiments of the present application, in the allyl-type flame-retardant prepolymer, the allyl-type benzoxazine compound has the following structural formula:

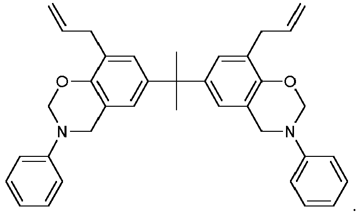

In some embodiments of the present application, the allyl-type flame-retardant prepolymer further includes 10 to 20 mass parts of an allyl-type non-phosphorus compound.

The allyl-type non-phosphorus compound is selected from allyl-type bisphenol A, allyl-type bisphenol S, allyl-type diphenyl ether, and combinations thereof.

In some embodiments of the present application, in the allyl-type flame-retardant prepolymer, the allyl-type flame-retardant prepolymer is prepared by mixing the allyl-type benzoxazine compound with the allyl-type phosphorous compound and then heating them at 100 to 130 °C for 1 to 3 hours.

In a second aspect of the present application, a resin composition is provided, including the following mass parts of components: 10 to 30 parts of an allyl-type flame-retardant prepolymer, 50 to 100 parts of a bismaleimide resin, 30 to 80 parts of a cyanate resin, 5 to 30 parts of a functional resin, and 10 to 60 parts of an inorganic filler, wherein the allyl-type flame-retardant prepolymer is as defined in the first aspect of the present application.

In some embodiments of the present application, in the resin composition, the bismaleimide resin is selected from an organic compound containing two or more maleimide structures in the molecular structure thereof; and/or

the cyanate resin is selected from a bisphenol A-type cyanate resin, a phenolic aldehyde-type cyanate resin, a bisphenol F-type cyanate resin, a multifunctional cyanate resin, a bisphenol M-type cyanate resin, a bisphenol E-type cyanate resin, a dicyclopentadiene bisphenol-type cyanate resin, and combinations thereof; and/or

the functional resin is selected from an epoxy resin, polyphenyl ether, a hydrocarbon resin, and combinations thereof; and/or

the inorganic filler is selected from zirconium vanadate, zirconium tungstate, hafnium tungstate, microcrystalline glass, eucryptite, silica, quartz, mica powder, titanium dioxide, magnesium oxide, magnesium hydroxide, talc, alumina, silicon carbide, boron nitride, aluminum nitride, molybdenum oxide, barium sulfate, zinc molybdate, zinc borate, zinc stannate, zinc oxide, strontium titanate, barium titanate, calcium titanate, clay, kaolinite, and the like, and combinations thereof.

In some embodiments of the present application, the resin composition further includes 1 to 5 mass parts of an auxiliary agent selected from a curing accelerator, a coupling agent, a toughening agent, and combinations thereof.

In a third aspect of the present application, a composite resin is provided, including the allyl-type flame-retardant prepolymer provided in the first aspect of the present application or the resin composition provided in the second aspect of the present application.

In a fourth aspect of the present application, a prepreg is provided, including a reinforcing material and a resin material loaded on the reinforcing material, wherein the resin material is the composite resin provided in the third aspect of the present application.

In a fifth aspect of the present application, a laminate is provided. A raw material for preparing the laminate includes the prepreg provided in the fourth aspect of the present application.

The copper-clad laminate with the bismaleimide as the main resin material has an excellent heat resistance but lacks sufficient flame retardancy. In order to improve the flame retardancy of the copper-clad laminate, a significant amount of a flame retardant or an inorganic filler is typically added to the formula, or the raw material resin is typically subjected to pretreatment such as modification. In the present application, by using an appropriate amount of the allyl-type flame-retardant prepolymer in combination with the components such as the bismaleimide and other functional resin, the inorganic filler, and the auxiliary agent, the comprehensive performance in terms of the heat resistance and the flame retardancy of the resin composition is improved, so that the laminate (the copper-clad laminate) prepared from the resin not only achieves the flame retardancy but also exhibits excellent comprehensive performance.

In the present application, the allyl-type benzoxazine compound and the allyl-type phosphorous compound are pre-polymerized to prepare the allyl-rich flame-retardant prepolymer, which is added to the bismaleimide resin to form the resin composition together with other components. The allyl groups in the resin composition combine with each other to lengthen the linear chain of benzoxazine, thereby reducing the stress generated in the reaction process, improving the toughness of the resin composition, and reducing the expansion and shrinkage of the resin composition.

In the resin composition provided in the present application, the synergistic effect of the nitrogen and phosphorus elements further improves the flame retardancy of the resin composition.

The laminate provided in the present application has an overall flame retardant rating of up to UL-94V0, a high glass transition temperature (Tg>300°C), a high peel strength, a high high-temperature modulus retention (flexural modulus or storage modulus), a low coefficient of thermal expansion (CTE), a low water absorption, and an exceptional dielectric property.

### DETAILED DESCRIPTION

The present application will be further described in conjunction with embodiments and examples. It should be understood that the embodiments are merely for illustrating the present application, and are not intended to limit the scope of the present application. In addition, it should be understood that various modifications or alterations can be made to the present application by a person skilled in the art after reading the contents taught by the present application, and all those equivalent forms shall fall within the protection scope defined by the appended claims of the present application.

Unless otherwise defined, all the technical and scientific terms used herein have the same meanings as the meanings commonly understood by a person skilled in the art to which the present application pertains. The terms used in the specification of the present application are merely for describing the specific embodiments, and are not intended to limit the present application.

### Terms

Unless otherwise stated or contradicted, the terms or phrases used herein have the following meanings:
As used herein, the terms "and/or", "or/and", "as well as/or" when used in a list of two or more associated items, mean that any one of the items can be selected, and any or all combinations of the items can be selected. The any or all combinations include the combination of any two of the associated listed items, the combination of any more of the associated listed items, or the combination of all associated listed items. It is to be noted that when connecting at least three items with a combination of at least two conjunctions selected from "and/or", "or/and", and "as well as/or", it is to be understood that, in the present application, the technical solution undoubtedly includes all technical solutions that are connected by "logical AND" and also undoubtedly includes all technical solutions that are connected by "logical OR". For example, "A and/or B" includes A, B, and A+B. For another example, "A, and/or, B, and/or, C, and/or, D" includes any one of A, B, C, and D (i.e., technical solutions connected by "logical OR"), and any and all combinations of A, B, C, D, such as the combination of any two or three of A, B, C, and D and the combination of A, B, C, and D (i.e., technical solutions connected by "logical AND").

In the present application, terms such as "preferred", "preferably", and "better" are only used to describe an embodiment or example with better effect, and should not be construed as constituting a limitation on the protection scope of the present application.

In the present application, terms such as "further", "furthermore", and "especially" are used for descriptive purposes and indicating differences in content, and should not be construed as constituting a limitation on the protection scope of the present application.

In the present application, the terms "first", "second", "third", "fourth", "fifth", etc., in "first aspect", "second aspect", "third aspect", "fourth aspect", "fifth aspect", etc., are used for descriptive purposes only and are not to be construed as indicating or implying relative importance or quantity, or as implicitly specifying the importance or quantity of the technical features indicated. Moreover, "first", "second", "third", "fourth", "fifth", and the like only serve the purpose of non-exhaustive enumeration, and should not be construed as constituting a closed-ended limitation of quantity.

In the present application, among the technical features described in an open-ended manner, a closed technical solution comprising the enumerated features is included, and an open-ended technical solution comprising the enumerated features is also included.

The present application relates to numerical intervals (i.e., ranges of values), wherein, unless otherwise specifically stated, the selectable numerical values are considered to be distributed continuously within the numerical intervals and include the two numerical endpoints (i.e., the minimum value and the maximum value) of the range of numerical values, as well as each of the numerical values between these two numerical endpoints. Unless otherwise specified, when the numerical range is directed only to integers within that numerical range, the two endpoint integers of that numerical range are included, as well as each integer between the two endpoints. In addition, when multiple ranges are provided to describe the feature or characteristic, the ranges may be combined. In other words, unless otherwise indicated, the ranges disclosed herein should be construed as including any and all sub-ranges subsumed therein.

In the present application, "at least one" includes one and should be construed as one or more than one.

In the present application, unless otherwise specifically defined, the temperature parameters allow for both constant temperature treatment and treatment within a certain temperature range. It should be understood that the constant temperature treatment allows for fluctuations within the precision range of the instrument, for example, allows for fluctuations within a range such as ±5°C, ±4°C, ±3°C, ±2°C, and ±1°C.

In the present application, unless otherwise specifically defined, the size, the particle size, or the diameter involved generally refers to an average value.

In a first aspect of present application, an allyl-type flame-retardant prepolymer is provided.

In the present application, the allyl-type flame-retardant prepolymer is prepared by pre-polymerization of an allyl-type benzoxazine compound with an allyl-type phosphorous compound. The resin composition added with the allyl-type flame-retardant prepolymer can achieve an excellent flame-retardant effect and exhibit an improved toughness, thereby having a good comprehensive performance.

In the first aspect of present application, an allyl-type flame-retardant prepolymer is provided, including 100 mass parts of an allyl-type benzoxazine compound and 20 to 80 mass parts of an allyl-type phosphorous compound.

The allyl-type phosphorous compound has the following structural formula:

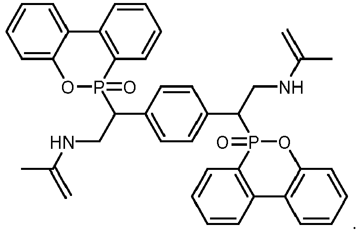

The allyl-type benzoxazine compound is selected from the compounds of the following structural formulas and combinations thereof: 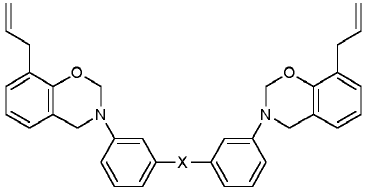 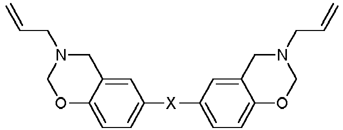 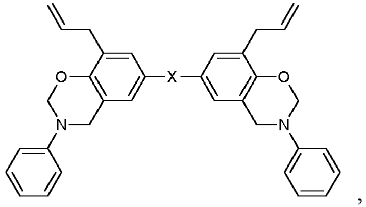
wherein X is independently selected from -CHRi-, -CR₂R₃-, -SO₂-, or -O-; and
R₁, R₂, and R₃ are each independently selected from -H or -CH₃.

In some embodiments of the present application, in the allyl-type flame-retardant prepolymer, a ratio of mass parts of the allyl-type benzoxazine compound to the allyl-type phosphorous compound is 100:(20 to 80), and may further be 100:(40 to 60). For example, the ratio of is mass parts is 100:20, 100:25, 100:30, 100:35, 100:40, 100:45, 100:50, 100:55, 100:60, 100:65, 100:70, 100:75, 100:80, etc.

In some embodiments of the present application, in the allyl-type flame-retardant prepolymer, a ratio of mass parts of the allyl-type benzoxazine compound to the allyl-type phosphorous compound is 100:50.

In the present application, in the allyl-type flame-retardant prepolymer, the allyl groups in the allyl-type benzoxazine compound and the allyl-type phosphorous compound are bonded to each other to lengthen the linear chain of the benzoxazine and reduce the stress generated in the reaction process, thereby improving the toughness of the resin composition, and reducing the expansion and shrinkage of the resin composition.

In some embodiments of the present application, in the allyl-type flame-retardant prepolymer, the allyl-type benzoxazine compound has the following structural formula:

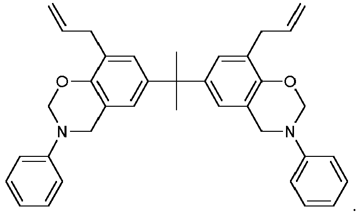

In some embodiments of the present application, the allyl-type flame-retardant prepolymer further includes 10 to 20 mass parts of an allyl-type non-phosphorus compound. In some embodiments, the allyl-type non-phosphorus compound is selected from allyl-type bisphenol A, allyl-type bisphenol S, allyl-type diphenyl ether, and combinations thereof.

In some embodiments of the present application, the allyl-type flame-retardant prepolymer further includes 10 mass parts of allyl-type bisphenol A.

In some embodiments of the present application, on basis of 100 mass parts of the allyl-type benzoxazine compound, the amount of the ally-type non-phosphorus compound in the allyl-type flame-retardant prepolymer is 10 to 20 mass parts, such as 10, 12, 15, 18, 20, etc.

In some embodiments of the present application, the allyl-type flame-retardant prepolymer is prepared by mixing the allyl-type benzoxazine compound with the allyl-type phosphorous compound and then heating them at 100 to 130 °C for 1 to 3 h. In some embodiments, the allyl-type benzoxazine compound and the allyl-type phosphorous compound are mixed and then heated at 100 to 130 °C. Further, the heating temperature may be selected from 100°C to 120°C, 100°C to 110°C, 100°C to 105°C, 110°C to 120°C, 120°C to 130°C, etc., such as 100°C, 105°C, 110°C, 115°C, 120°C, 125°C, 130°C, etc. In some embodiments, the heating time is 1 h to 3 h, and further may be selected from 1 h to 3 h, 1 h to 2 h, 1 h to 1.5 h, 2 h to 3 h, 2.5 h to 3 h, etc., such as 1 h, 1.5 h, 2 h, 2.5 h, 3 h, etc.

In some embodiments of the present application, the allyl-type flame-retardant prepolymer is prepared by mixing the allyl-type benzoxazine compound with the allyl-type phosphorous compound and then heating them at 120 °C for 2.5 h.

In a second aspect of the present application, a resin composition (a BT resin composition) is provided, which has an excellent flame retardancy, a high high-temperature modulus retention, and an exceptional dielectric property.

In the second aspect of the present application, a resin composition is provided, including the following mass parts of components: 10 to 30 parts of an allyl-type flame-retardant prepolymer, 50 to 100 parts of a bismaleimide resin, 30 to 80 parts of a cyanate resin, 5 to 30 parts of a functional resin, and 10 to 60 parts of an inorganic filler, wherein the allyl-type flame-retardant prepolymer is as defined in the first aspect of the present application.

In some embodiments of the present application, on basis of 50 to 100 mass parts of the bismaleimide resin, the amount of the allyl-type flame-retardant prepolymer in the resin composition is 10 to 30 mass parts, further 10 to 20, such as 10, 12, 15, 18, 20, 22, 25, 28, 30, etc.

In the present application, the bismaleimide resin is selected from an organic compound containing two or more maleimide structures in the molecular structure thereof.

In some embodiments of the present application, the bismaleimide resin is selected from N-phenylmaleimide group, N-(2-methylphenyl)maleimide group, N-(4-methylphenyl)maleimide group, N-(2,6-dimethylphenyl)maleimide group, bis(4-maleimidophenyl)methane group, 2,2-bis(4-(4-maleimidophenoxy)-phenyl)propane group, bis(3,5-dimethyl-4-maleimidophenyl)methane group, bis(3-ethyl-5-methyl-4-maleimidophenyl)methane group, bis(3,5-diethyl-4-maleimidophenyl)methane group, polyphenylmethanebismaleimide group, biphenyl-containing maleimide group, and combinations thereof.

In some embodiments of the present application, the bismaleimide resin is N,N'-(4,4'-methylenediphenyl)bismaleimide.

In some embodiments of the present application, on basis of 10 to 30 mass parts of the allyl-type flame-retardant prepolymer, the amount of the bismaleimide resin in the resin composition is 50 to 100 mass parts, further 50 to 75, such as 50, 55, 60, 65, 70, 75, 85, 90, 100, etc.

In some embodiments of the present application, the cyanate resin is selected from a bisphenol A-type cyanate resin, a phenolic aldehyde-type cyanate resin, a bisphenol F-type cyanate resin, a multifunctional cyanate resin, a bisphenol M-type cyanate resin, a bisphenol E-type cyanate resin, a dicyclopentadiene bisphenol-type cyanate resin, and combinations thereof.

In some embodiments of the present application, the cyanate resin is the bisphenol A-type cyanate resin.

In some embodiments of the present application, on basis of 50 to 100 mass parts of the bismaleimide resin, the amount of the allyl-type flame-retardant prepolymer in the resin composition is 30 to 80 mass parts, further 30 to 60, such as 30, 35, 40, 45, 50, 55, 60, 70, 80, etc.

In some embodiments of the present application, the functional resin is selected from an epoxy resin, polyphenyl ether, a hydrocarbon resin, and combinations thereof.

In some embodiments of the present application, the functional resin is the epoxy resin.

In some embodiments of the present application, on basis of 50 to 100 mass parts of the bismaleimide resin, the amount of the functional resin in the resin composition is 5 to 30 mass parts, further 5 to 20, such as 5, 8, 10, 12, 15, 17, 20, 25, 30, etc.

In some embodiments of the present application, the inorganic filler is selected from zirconium vanadate, zirconium tungstate, hafnium tungstate, microcrystalline glass, eucryptite, silica, quartz, mica powder, titanium dioxide, magnesium oxide, magnesium hydroxide, talc, alumina, silicon carbide, boron nitride, aluminum nitride, molybdenum oxide, barium sulfate, zinc molybdate, zinc borate, zinc stannate, zinc oxide, strontium titanate, barium titanate, calcium titanate, clay, kaolinite, and the like, and combinations thereof.

In some embodiments of the present application, the inorganic filler is silica.

In some embodiments of the present application, on basis of 50 to 100 mass parts of the bismaleimide resin, the amount of the inorganic filler in the resin composition is 10 to 60 mass parts, further 40 to 50, such as 10, 20, 30, 35, 38, 40, 42, 45, 50, 55, 60, etc.

In the present application, the resin composition may include an auxiliary agent or no auxiliary agent.

In some embodiments of the present application, the auxiliary agent is selected from a curing accelerator, a coupling agent, a toughening agent, and combinations thereof.

In some embodiments of the present application, the auxiliary agent is a curing accelerator.

Further, the curing accelerator may be selected from imidazoles, such as 2-methylimidazole, 2-phenylimidazole, and 2-ethyl-4-methylimidazole, or selected from organic metal salts, such as zinc octanoate, zinc isooctanoate, stannous octanoate, dibutyltin dilaurate, zinc naphthenate, cobalt naphthenate, aluminum acetylacetonate, cobalt acetylacetonate, copper acetylacetonate, and combinations thereof. The coupling agent may be selected from a silane coupling agent, a titanate coupling agent, an aluminate coupling agent, an organic chrome complex coupling agent, and combinations thereof. The toughening agent may be selected from rubber, silicone, polybutadiene, and combinations thereof.

In some embodiments of the present application, the auxiliary agent is 2-methylimidazole as a curing accelerator.

In some embodiments of the present application, on basis of 50 to 100 mass parts of the bismaleimide resin, the amount of the auxiliary agent in the resin composition is 1 to 5 mass parts, further 2 to 5, such as 1, 2, 3, 4, 5, 6, 7, 8, etc.

In some embodiments, the resin composition includes the following mass parts of components: 10 to 30 parts of the allyl-type flame-retardant prepolymer, 50 to 100 parts of the bismaleimide resin, 30 to 80 parts of the cyanate resin, 5 to 30 parts of the functional resin, 10 to 60 parts of the inorganic filler, and 0 to 5 parts of the auxiliary agent. The amount of the allyl-type flame-retardant prepolymer may independently range from 10 to 30 mass parts, such as 10, 12, 15, 18, 20, 25, 28, 30, etc. The amount of the bismaleimide resin may independently range from 50 to 100 mass parts, such as 50, 55, 60, 65, 70, 75, 80, 85, 90, 95, 100, etc. The amount of the cyanate resin may independently range from 30 to 80 mass parts, such as 30, 40, 50, 60, 70, 80, etc. The amount of the functional resin may independently range from 5 to 30 mass parts, such as 5, 8, 10, 12, 15, 18, 20, 25, 28, 30, etc. The amount of the inorganic filler may independently range from 10 to 60 mass parts, such as 10, 20, 30, 50, 50, 60, etc. The amount of the auxiliary agent may independently range from 0 to 5 mass parts, further 1 to 5, yet further 2 to 5, such as 0, 1, 2, 3, 4, 5, etc.

In a third aspect of the present application, a composite resin is provided, including the allyl-type flame-retardant prepolymer provided in the first aspect of the present application or the resin composition provided in the second aspect of the present application. The composite resin has excellent flame retardancy and heat resistance, as well as good high-temperature modulus performance.

In a fourth aspect of the present application, a prepreg is provided, including the composite resin provided in the third aspect of the present application.

In some embodiments of the present application, the prepreg includes a reinforcing material and a resin material loaded on the reinforcing material. The resin material may be the composite resin as described above.

In a fifth aspect of the present application, a laminate is provided, including the prepreg provided in the fourth aspect of the present application.

In the present application, the laminate has a flame retardant rating of up to UL94V0 and an excellent comprehensive performance. In some embodiments, the laminate has a glass transition temperature Tg of >250°C, and further, Tg>280°C. In some embodiments, the laminate has a peel strength of >5.6 lb/in. In some embodiments, the laminate has a heat resistance of >300 seconds in immersion tin test. In some embodiments, the laminate passes the pressure cooker test (PCT). In some embodiments, the laminate has a storage modulus of >30 Gpa at 200°C. In some embodiments, the laminate has a water absorption of 0.1% to 0.12%. Some specific examples are shown below.

In the following specific examples, for experimental parameters which are not specified, reference is preferentially made to the teachings provided in this application document, or to experimental manuals in the art or other experimental methods known in the art, or to experimental conditions recommended by the manufacturers.

In the following specific examples, the raw materials and reagents involved are commercially available, or can be prepared by a person skilled in the art according to known means.

### Raw Material:

Bismaleimide resin, Honghu Shuangma factory, BMI-01;
Cyanate resin, Lonza Group, BA-3000S;
Phosphorous epoxy resin, Epoxy Base Electronic Corporation Limited, 589K75;
Phosphazene compound, Otsuka Chemistry, SPB 100;
Epoxy resin, Nippon Kayaku, NC3000H;

### Preparation of allyl-type phosphorous compound:

First step: 1 mol of 2-methylallylamine and a solvent were mixed, heated to 80°C to 120°C, added with 0.5 mol of terephthalaldehyde, and subjected to a reaction for 3 to 8 hours under the nitrogen atmosphere;
Second step: the reaction liquid was cooled to room temperature and suction-filtered to obtain a crude product, the crude product was recrystallized with water (4~7 times), and then the recrystallized product was then dried at 60°C to 90°C for 24 hours to obtain an intermediate product;
Third step: 0.5 mol of the intermediate product, 1 mol of 9,10-dihydro-9-oxa-10-phospha-phenanthrene-10-oxide (DOPO), and a solvent were mixed and heated to 100 °C to 150 °C to carry out a reaction for 5 to 7 hours under the nitrogen atmosphere, the reaction liquid was cooled to room temperature and recrystallized with water (4~7 times), and then the recrystallized product was dried at 60°C to 90°C for 24 hours to obtain the allyl-type phosphorous compound.

### Preparation of allyl-type flame-retardant prepolymer 1:

100 mass parts of an allyl-type benzoxazine compound and 50 mass parts of an allyl-type phosphorous compound were placed into a three-necked flask, added and mixed with an organic solvent, heated in an oil bath to 120°C, and continuously stirred for 2.5 h to obtain the allyl-type flame-retardant prepolymer 1, wherein the allyl-type benzoxazine compound has the following structural formula:

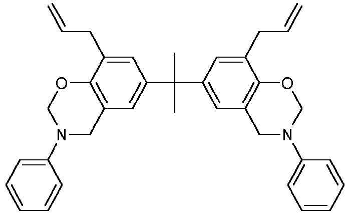

### Preparation of allyl-type flame-retardant prepolymer 2:

100 mass parts of an allyl-type benzoxazine compound, 50 mass parts of an allyl-type phosphorous compound, and 10 mass parts of allyl-type bisphenol A were placed into a three-necked flask, added and mixed with an organic solvent, heated in an oil bath to 120°C, and continuously stirred for 2.5 h to obtain the allyl-type flame-retardant prepolymer 2, wherein the allyl-type benzoxazine compound has the following structural formula:

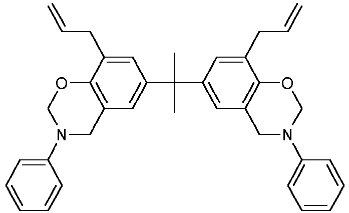

### Preparation of allyl-type flame-retardant prepolymer 3:

100 mass parts of an allyl-type benzoxazine compound and 100 mass parts of an allyl-type phosphorous compound were placed into a three-necked flask, added and mixed with an organic solvent, heated in an oil bath to 120°C, and continuously stirred for 2.5 h to obtain the allyl-type flame-retardant prepolymer 3, wherein the allyl-type benzoxazine compound has the following structural formula:

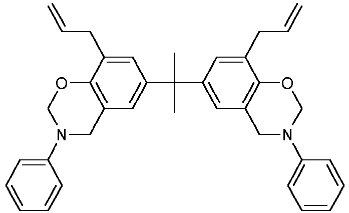

### Preparation of prepreg:

The raw materials were mixed uniformly in accordance to the ratios of components listed in Table 1 to prepare a glue liquid, and then 2116 glass fiber cloth was impregnated with the glue liquid and oven-baked at 160°C for 3 min to obtain the prepreg with a glue content of 55%.

**Table 1**

| Components | Example | | | | Comparative example | | | |
|---|---|---|---|---|---|---|---|---|
| | 1 | 2 | 3 | 4 | 1 | 2 | 3 | 4 |
| Allyl-type flame-retardant prepolymer 1 | 10 | 20 | 30 | - | 50 | - | - | - |
| Allyl-type flame-retardant prepolymer 2 | - | - | - | 20 | - | - | - | - |
| Allyl-type flame-retardant prepolymer 3 | - | - | - | - | - | 20 | - | - |
| Bismaleimide resin | 50 | 75 | 100 | 75 | 75 | 75 | 50 | 50 |
| Cyanate resin | 30 | 55 | 80 | 55 | 55 | 55 | 30 | 30 |
| Phosphorous epoxy resin | - | - | - | - | - | - | 30 | - |
| Phosphazene compound | - | - | - | - | - | - | - | 30 |
| Epoxy resin | 5 | 17.5 | 30 | 17.5 | 17.5 | 17.5 | - | 17.5 |
| Silica | 40 | 40 | 40 | 40 | 40 | 40 | 40 | 40 |
| Curing accelerator | 2 | 3 | 5 | 3 | 3 | 3 | 2 | 2 |

In the Table 1, "-" means no.

### Preparation of laminate:

Ten prepregs were stacked with each other. The stack was covered with one electrolytic copper foil with a thickness of 18 µm on each of the top and the bottom thereof, placed into a vacuum laminator with a programmable temperature and pressure controller, and heated and cured in a vacuum state with a pressure of 30 kgf/cm² (vacuum degree < 10 mBar) in the following stages: heating at 180 °C for 1h, increasing temperature to 220 °C and heating at 220 °C for 2 h, increasing temperature to 240 °C and heating at 240 °C for 2 h, and cooling, to obtain a copper clad laminate with a thickness of 1.0 mm.

### Performance test:

The performances of the laminates prepared in Examples 1 to 3 and Comparative examples 1 to 4 were tested according to the following testing standard, respectively:
The glass-transition temperature (Tg)/storage modulus was tested according to IPC-TM650 2.4.25D.

The peel strength was tested according to IPC-TM-650 2.4.8.

The heat resistance in tin immersion was tested according to IPC-TM650 2.4.6.

The PCT was tested according to IPC-TM650 2.6.23.

The flexural modulus was tested according to IPC-TM650 2.4.4.

The flame retardant rating was tested according to IPC-TM650 2.3.10.

The water adsorption was tested according to IPC-TM650 2.6.2.1.

The dielectric property was tested according to IPC-TM650 2.5.5.9.

The results of the above testes were shown in Table 2.

**Table 2**

| Test items | Example | | | | Comparative example | | | |
|---|---|---|---|---|---|---|---|---|
| | 1 | 2 | 3 | 4 | 1 | 2 | 3 | 4 |
| Tg/°C | 272 | 280 | 285 | 282 | 270 | 260 | 241 | 252 |
| peel strength/ lb/in | 5.9 | 5.7 | 5.6 | 5.8 | 5.2 | 5.1 | 5.0 | 4.5 |
| heat resistance in tin immersion /s | >300 | >300 | >300 | >300 | >300 | >300 | >300 | >300 |
| PCT(121°C*4 h)/s | Pass | Pass | Pass | Pass | Pass | Pass | NG | NG |
| flexural modulus at 25°C /Gpa | 30/28 | 30/29 | 31/29 | 31/30 | 29/27 | 29/27 | 27/25 | 27/24 |
| storage modulus at 50°C/Gpa | 25.88 | 26.13 | 26.54 | 26.89 | 26.48 | 26.55 | 23.45 | 24.12 |
| storage modulus at 200°C /Gpa | 30.54 | 30.66 | 30.84 | 30.78 | 28.58 | 28.44 | 12.44 | 12.88 |
| flame retardant rating | UL94 V0 | UL94 V0 | UL94 V0 | UL94 V0 | UL94 V0 | UL94 V0 | UL94 V0 | UL94 V0 |
| water adsorption /% | 0.10 | 0.12 | 0.10 | 0.11 | 0.21 | 0.20 | 0.35 | 0.36 |
| Dk/Df | 4.2/0.0 06 | 4.1/0.0 06 | 4.0/0.0 05 | 4.2/0.0 07 | 4.6/0.0 10 | 4.6/0.0 10 | 4.6/0.0 15 | 4.6/0.0 18 |

In the Table 2, "Pass" means that the time is larger than 300 s, and "NG" means that the time is less than 10 s.

From the data in Table 2, it can be seen that the resin composition formula using the allyl-type flame-retardant prepolymer provided by the present application has an excellent flame retardancy which is up to the UL94V0 level, a high temperature and moisture resistance, a low high-temperature modulus change rate, a low water absorption, and an exceptional dielectric property.

From the data in Table 2, it can also be seen that if the ratio of components of the prepolymer is changed, then the peel strength is decreased, the water absorption is increased, and the modulus performance is also affected. By adding the allyl-type bisphenol A, the viscosity may be increased and the peel strength may be improved. However, if the allyl-type flame-retardant prepolymer is added to much, then the high-temperature modulus performance is significantly reduced, and the water absorption is increased, seriously affecting the comprehensive performance of the laminate. If the allyl-type flame-retardant prepolymer in the present application is not adopted, or the conventional phosphorous resin instead of the allyl-type flame-retardant prepolymer in the present application is used as the flame retardant, then the water absorption is significantly increased while the modulus performance and the dielectric property are significantly reduced.

All documents mentioned herein are incorporated by reference in this application as if each document were individually incorporated by reference. Unless in conflict with the purpose and/or the technical solution of the present application, the cited documents involved in the present application are cited in their entirety and for their entire purpose. When the present application involves cited documents, the definitions of relevant technical features, terms, norms, phrases, and the like in the cited documents are also cited. When the present application involves the cited documents, the cited examples and preferred ways of the relevant technical features may also be incorporated into the present application as references, but only to the extent that the present application can be implemented. It should be understood that when the cited contents conflict with the description in the present application, the present application shall prevail or adaptive amendments shall be made according to the description in the present application.

The technical features of the above-mentioned embodiments and examples can be combined arbitrarily. In order to make the description concise, not all possible combinations of the technical features of the above-mentioned embodiments and examples are described. However, as long as there is no contradiction in the combination of these technical features, the combinations should be considered as in the scope of the present application.

The above-described embodiments are only several implementations of the present application, but they should not be construed as limiting the scope of the present application. It should be understood by those of ordinary skill in the art that various modifications and improvements can be made without departing from the concept of the present application, and all fall within the protection scope of the present application. It should also be understood that after reading the above teachings of the presentation application, a person skilled in the art may make various changes or modifications to the presentation application, and the equivalent forms obtained will also fall within the scope of protection of the present application. It should also be understood that the technical solutions obtained by the person skilled in the art through logical analysis, reasoning, or limited experimentation based on the technical solutions provided in the present application are within the scope of protection of the claims appended to the present application. Therefore, the patent protection of the present application shall be defined by the appended claims, and the specification can be used to interpret the contents of the claims.

## Claims

1. An allyl-type flame-retardant prepolymer, comprising 100 mass parts of an allyl-type benzoxazine compound and 20 to 80 mass parts of an allyl-type phosphorous compound;
wherein the allyl-type phosphorous compound has the following structural formula: 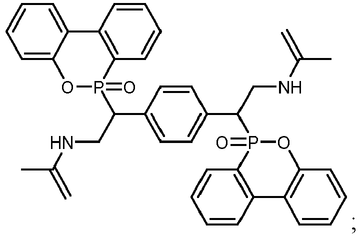
the allyl-type benzoxazine compound is selected from the compounds of the following structural formulas and combinations thereof: 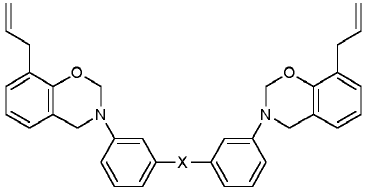 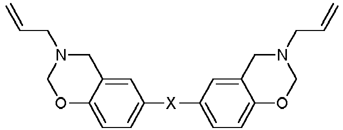 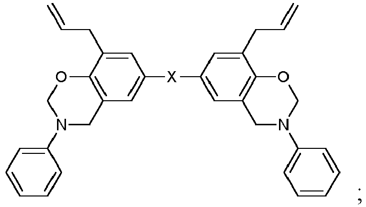
wherein X is independently selected from -CHRi-, -CR₂R₃-, -SO₂-, or -O-;
R₁, R₂, and R₃ are each independently selected from -H or -CH₃.

2. The allyl-type flame-retardant prepolymer of claim 1, wherein the allyl-type benzoxazine compound has the following structural formula:

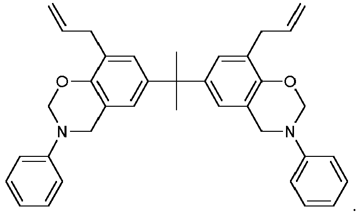

3. The allyl-type flame-retardant prepolymer of any one of claims 1 to 2, further comprising 10 to 20 mass parts of an allyl-type non-phosphorus compound, wherein the allyl-type non-phosphorus compound is selected from allyl-type bisphenol A, allyl-type bisphenol S, allyl-type diphenyl ether, and combinations thereof.

4. The allyl-type flame-retardant prepolymer of claim 1, wherein the allyl-type flame-retardant prepolymer is prepared by mixing the allyl-type benzoxazine compound with the allyl-type phosphorous compound and then heating them at 100 to 130 °C for 1 to 3 hours.

5. Aresin composition, comprising the following mass parts of components: 10 to 30 parts of an allyl-type flame-retardant prepolymer, 50 to 100 parts of a bismaleimide resin, 30 to 80 parts of a cyanate resin, 5 to 30 parts of a functional resin, and 10 to 60 parts of an inorganic filler, wherein the allyl-type flame-retardant prepolymer is as defined in any one of claims 1 to 4.

6. The resin composition of claim 5, wherein the bismaleimide resin is selected from an organic compound containing two or more maleimide structures in the molecular structure thereof; and/or
the cyanate resin is selected from a bisphenol A-type cyanate resin, a phenolic aldehyde-type cyanate resin, a bisphenol F-type cyanate resin, a multifunctional cyanate resin, a bisphenol M-type cyanate resin, a bisphenol E-type cyanate resin, a dicyclopentadiene bisphenol-type cyanate resin, and combinations thereof; and/or
the functional resin is selected from an epoxy resin, polyphenyl ether, a hydrocarbon resin, and combinations thereof; and/or
the inorganic filler is selected from zirconium vanadate, zirconium tungstate, hafnium tungstate, microcrystalline glass, eucryptite, silica, quartz, mica powder, titanium dioxide, magnesium oxide, magnesium hydroxide, talc, alumina, silicon carbide, boron nitride, aluminum nitride, molybdenum oxide, barium sulfate, zinc molybdate, zinc borate, zinc stannate, zinc oxide, strontium titanate, barium titanate, calcium titanate, clay, kaolinite, and the like, and combinations thereof.

7. The resin composition of claim 5, further comprising 1 to 5 mass parts of an auxiliary agent selected from a curing accelerator, a coupling agent, a toughening agent, and combinations thereof.

8. A composite resin, comprising the allyl-type flame-retardant prepolymer of any one of claims 1 to 4 or the resin composition of any one of claims 5 to 7.

9. A prepreg, comprising a reinforcing material and a resin material loaded on the reinforcing material, wherein the resin material is the composite resin of claim 8.

10. A laminate, prepared from a raw material comprising the prepreg of claim 9.
